(19) Europäisches Patentamt

European Patent Office

Office européen des brevets

(11) **EP 1 725 042 A1**

(12) **EUROPEAN PATENT APPLICATION**

(43) Date of publication:
**22.11.2006 Bulletin 2006/47**

(51) Int Cl.:
*H04N 7/26* (2006.01)    *H04N 7/30* (2006.01)

(21) Application number: **06252388.1**

(22) Date of filing: **05.05.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **16.05.2005 US 682025 P**
**10.08.2005 US 200957**

(71) Applicant: **Ensequence, Inc.**
**Portland, OR 97204 (US)**

(72) Inventor: **Westerman, Larry A.**
**Portland, OR 97210 (US)**

(74) Representative: **Carlin, Robert George et al**
**Olswang**
**90 High Holborn**
**London WC1V 6XX (GB)**

(54) **Fade frame generating for MPEG compressed video data**

(57)    Methods and systems of using a single MPEG frame to produce a fade effect that extends over more than one frame period. An example system includes a computer-based device that includes a receiver that receives an MPEG formatted image from a source system over a network, a component that modifies a sequence header of the received MPEG formatted image based on a pre-determined fade event, and a decoder that decodes the MPEG formatted image with the modified sequence header. Also, the system includes a display device that displays the decoded image.

FIG. 2.

EP 1 725 042 A1

**Description**

**PRIORITY INFORMATION**

This application claims priority to provisional patent application serial no. 60/682,025, filed May 16, 2005 and is incorporated herein by reference.

**FIELD OF THE INVENTION**

This invention relates generally to bandwidth reduction in the transmittal of images using digital communications techniques.

**BACKGROUND OF THE INVENTION**

The MPEG video compression scheme has become the worldwide standard for video compression, and is used in digital satellite broadcast, digital cable distribution, digital terrestrial broadcast, and DVD video encoding. The MPEG takes advantage of both spatial and temporal redundancy in conventional video content to achieve high compression ratios, while maintaining quality at reasonable data rates.

Temporal redundancy is exploited in MPEG video compression through the use of predictive frames. Once a frame has been encoded, transmitted and decoded, the frame content can be used as a prediction for other frames. One clever feature of the MPEG standard is the ability to use both a past reference frame (one which has already been displayed) and a future reference frame (one which has not yet been displayed). A reference frame can be created either by encoding the entire contents of the frame at once (an intra-coded or I-frame), or by coding the difference from a previous reference frame (a predictive or P-frame). An I-frame encompasses a relatively large amount of data, since every 16x16 pel region of the video frame must be encoded in a self-contained manner, that is, as an intra-coded macroblock. On the other hand, a P-frame can use one of two methods for each macroblock: Either the content can be predicted from a portion of the previous reference frame (by specifying a motion vector to a given position in the previous reference frame) with an optional differential correction applied (a motion-compensated predictive macroblock); or the content can be fully specified (an intra-coded macroblock).

A third type of frame can also be used in an encoded sequence. This frame type, a bidirectionally-predicted or B-frame, allows a flexible combination of a motion-compensated macroblock from a past reference frame and/or a motion-compensated macroblock from a future reference frame, with an optional differential correction applied (a bi-directional motion-compensated predictive macroblock). Alternatively, macroblocks in a B-frame can be encoded using intra-coding.

One common technique used in video production and in computer interfaces is the gradual transition from one image to another — a fade. Fades are used to enliven a video presentation, or for special effects in applications, particularly in games. By definition, a fade takes more than one frame to accomplish — a complete change of visual content in a single frame is considered a cut, not a fade. The MPEG encoding standard allows a simple and efficient technique for achieving a two-step fade through the use of P- and B-frames. Suppose that a first reference frame contains the visual content before the fade. A second reference frame can be encoded to contain the visual content after the fade. The two reference frames can be encoded as either I- or P-frames as desired. A single intermediate state can then be created by constructing a B-frame that simply averages the contents of the past and future reference frames, providing a two-frame fade. This procedure produces a two-step fade, but there is no simple extension of this technique to accomplish a multi-frame fade. To do this using conventional coding techniques requires the generation of multiple B-, P- or I-frames, each of which encodes part of the transition between the old and new visual content.

MPEG video image content is often used in contexts other than conventional linear video broadcast. For instance, many interactive television (iTV) applications use MPEG video encoding to produce full-color still frame images, which can then be decoded by MPEG decoding hardware during playout of the application. In such applications, memory and broadcast bandwidth both limit the amount of data that can be transmitted to and used on the set-top box (STB) by the application. Producing a fade effect in an iTV application through the use of conventional MPEG encoding thus requires a series of MPEG-encoded frames that must be broadcast to and decoded by the application.

Therefore, there exists a need for systems and methods that produce multi-frame fade effects in an iTV application that is memory efficient while providing for flexible use in the application.

**SUMMARY OF THE INVENTION**

The present invention provides methods and systems of using a single MPEG frame to produce a fade effect that extends over more than one frame period.

An example system includes a computer-based device that includes a receiver that receives an MPEG formatted image from a source system over a network, a component that modifies a sequence header of the received MPEG formatted image based on a pre-determined fade event, and a decoder that decodes the MPEG formatted image with the modified sequence header. Also, the system includes a display device that displays the decoded image.

The received MPEG formatted image may be a P- or B-frame formatted image.

## BRIEF DESCRIPTION OF THE DRAWINGS

Preferred and alternative embodiments of the present invention are described in detail below with reference to the following drawings.

FIGURES 1 and 2 illustrate components of a system formed in accordance with an embodiment of the present invention;
FIGURE 3 is a flow diagram of an example process performed by the system components shown in FIGURES 1 and 2;
FIGURE 4 illustrates examples of corrected and uncorrected pixel transformations during P-frame decoding in accordance with an embodiment of the present invention;
FIGURES 5A-D illustrate fade effects for various levels of fades in accordance with embodiments of the present invention; and
FIGURE 6 illustrates an example of content format for B-frame data that is used to produce a fade effect in accordance with an embodiment of the present invention.

## DETAILED DESCRIPTION OF THE PREFERRED EMBODIMENT

The current invention defines methods and systems that produce a fade effect that extends over more than one frame period. Because the invention is particularly useful in the context of broadcast systems, the preferred embodiment is described as such a system.

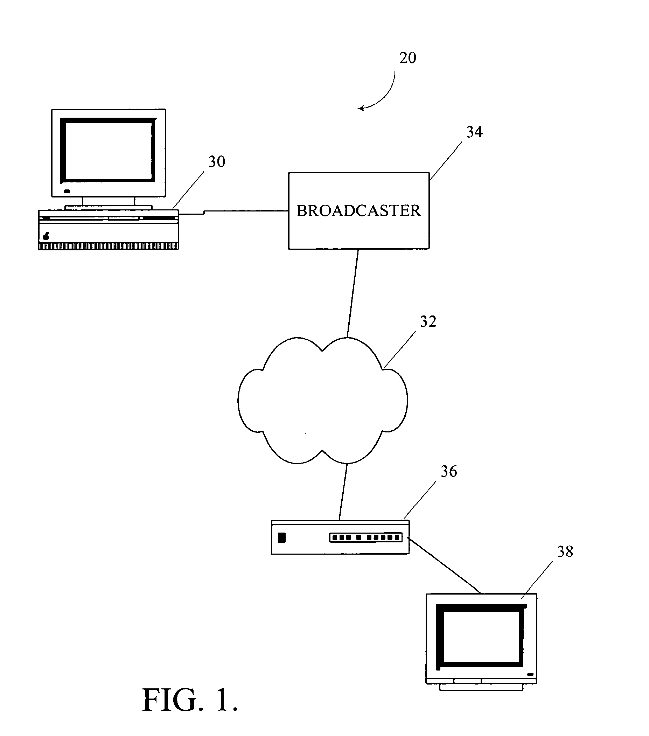

FIGURE 1 shows a diagram of a system 20 to produce a fade effect. The system 20 includes a server device 30, a broadcaster device 34, a broadcast network 32, and a plurality of set top boxes (STB) 36 with corresponding display devices 38. The device 30 prepares image data for transmission in accordance with an MPEG format and delivers it to the broadcaster device 34. In one embodiment, the broadcaster device 34 combines the received MPEG formatted images with other audio, video, or data content, then transmits the combined data to one or many STB 36 over the broadcast network 32. The STB 36 redefines one or more of the MPEG formatted images based on one of an automatic or manually entered fade requests. The STB 36 includes a decoder for decoding the modified MPEG formatted image(s) and displays the results of the decoding on the display device 38.

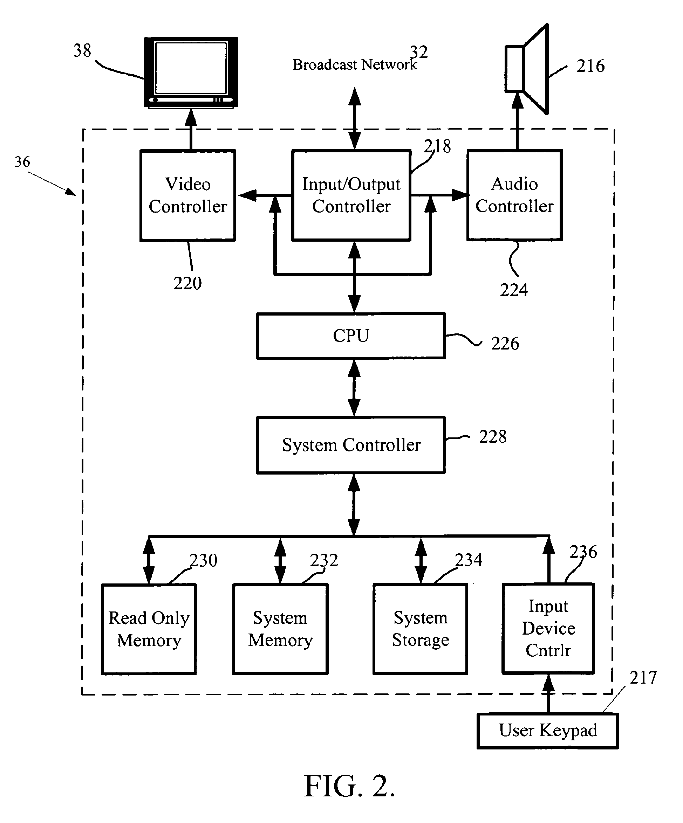

FIGURE 2 shows an example of the STB 36 (a data processing/media control reception system) 36 operable for using embodiments of the present invention. The STB 36 receives data from the broadcast network 32, such as a broadband digital cable network, digital satellite network, or other data network. The STB 36 receives audio, video, and data content from the network 32. The STB 36 controls the display 38, such as a television, and an audio subsystem 216, such as a stereo or a loudspeaker system. The STB 36 also receives user input from a wired or wireless user keypad 217, which may be in the form of a STB remote.

The STB 36 receives input from the network 32 via an input/output controller 218, which directs signals to and from a video controller 220, an audio controller 224, and a central processing unit (CPU) 226. In one embodiment, the input/output controller 218 is a demultiplexer for routing video data blocks received from the network 32 to a video controller 220 in the nature of a video decoder, routing audio data blocks to an audio controller 224 in the nature of an audio decoder, and routing other data blocks to a CPU 226 for processing. In turn, the CPU 226 communicates through a system controller 228 with input and storage devices such as ROM 230, system memory 232, system storage 234, and input device controller 236.

The system 36 thus can receive incoming data files of various kinds. The system 36 can react to the files by receiving and processing changed data files received from the network 32.

While a set-top box is preferred, the same functionality may be implemented within a television, computer device, or other configuration.

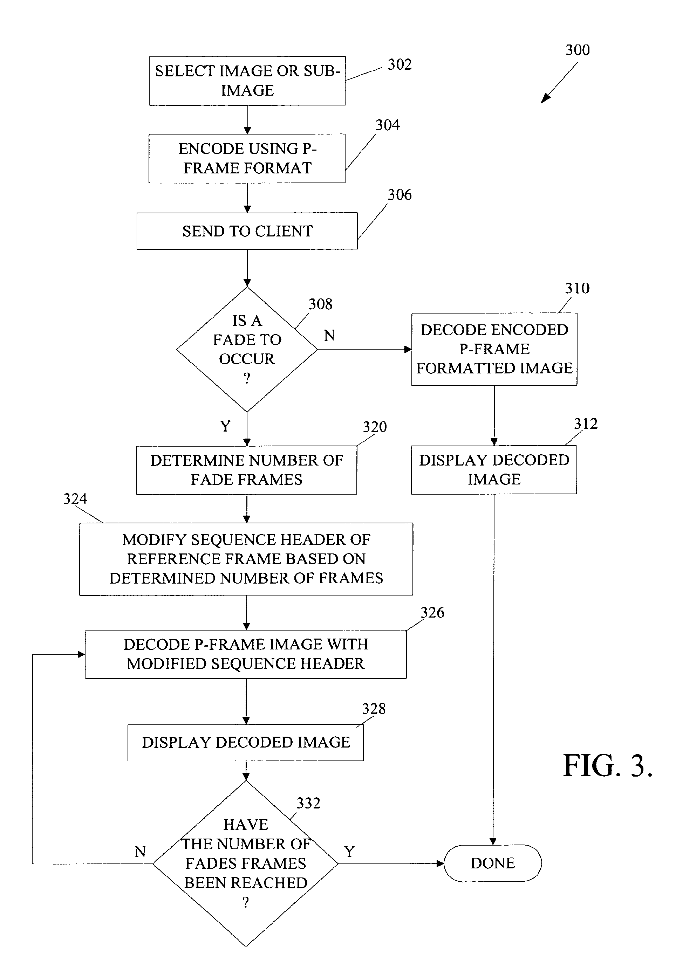

FIGURE 3 illustrates a flow diagram of an example process 300 performed by the system components shown in FIGURES 1 and 2. First, at a block 302, an image or subimage is selected at the device 30 for a transmission. At a block 304, the selected image or subimage is encoded using MPEG P-frame format. At a block 306, the P-frame encoded image is sent to one or many clients (STB 36). In one embodiment, the P-frame encoded image is combined with other audio, video, or other data at the broadcaster device 34 prior to transmission to the client.

At a decision block 308, the STB 36 having a processing device, receives the transmission and determines if a fade of the received P-frame encoded image is to occur. The request for presentation of the P-frame encoded image may be as a result of the occurrence of a particular frame within a video sequence, as a result of the passage of time, as the result of viewer interaction with the STB 36 via the user keypad 117, or by other means. The determination of whether a fade is to occur can be implemented, for example, by an automatic setting stored within the STB 36 or by a user fade request. The STB 36 receives the user request by any of a number of means, for example, a fade request signal is transmitted from an interface device, such as the user keypad 217 or by any of a number of different data input means. If no manual or automatic fade request is detected at the decision block 308, then the received encoded P-frame formatted image is decoded at a block 310 and sent to the display device 38 for display, see block 312. If, however, a fade request was present, as determined at the decision block 308, the STB 36 determines the number of fade frames required in accordance with the fade request, see block 320. The sequence header of the P-frame formatted image is modified based on the fade request (determined number of fade frames), see block 324. At a block 326, the STB 36 decodes the recently modified P-frame image at a block 328 and sends the decoded image to the display device 38 to be presented to a user. At a decision block 332, the STB 36 determines if the determined number of fade frames has been reached. If the determined number of fade frames has been reached, then the fade process is complete. If the number of fade frames has not been reached, then the process returns to subsequent decoding of the modified P-frame image at the block 326 until the fade process is complete. By the repeated decoding of the modified P-frame image (updating of reference frame), a fade effect occurs.

In MPEG video encoding, each macroblock in a P- or B-frame is either coded or skipped. If the macroblock is skipped, the content of the previous reference frame is copied into the current frame without modification. If the macroblock is coded, several options are available for the coding method:

- P-frame macroblocks can be encoded as

  o Previous value with correction
  o Previous value with correction using new quantizer
  o Motion compensated
  o Motion compensated with correction
  o Motion compensated with correction using new quantizer
  o Intra-coded
  o Intra-coded using new quantizer

- B-frame macroblocks can be encoded as

  o Forward motion compensation
  o Forward motion compensation with correction
  o Forward motion compensation with correction using new quantizer
  o Backward motion compensation
  o Backward motion compensation with correction
  o Backward motion compensation with correction using new quantizer
  o Bi-directional motion compensation
  o Bi-directional motion compensation with correction
  o Bi-directional motion compensation with correction using new quantizer
  o Intra-coded
  o Intra-coded using new quantizer

All of these coding techniques except 'Intra-coded' and 'Intra-coded using new quantizer' result in non-intra encoding. The present invention requires encoding of each macroblock in a P- or B-frame as a non-intra macroblock with zero motion vectors, meaning that the final content for the macroblock is created by combining a prediction from a past and/or future reference frame, plus a correction encoded in the current frame data. The MPEG standard specifies default quantizers for each coefficient in both intra and non-intra encoding. The MPEG standard also allows for the specification of new quantizer matrices for either or both cases. The current invention takes advantage of this latter capability to accomplish the task of producing a fade effect from a single frame.

For convenience in what follows, the invention will be described through the use of P-frame encoding. However, the same approach can be used with B-frame encoding.

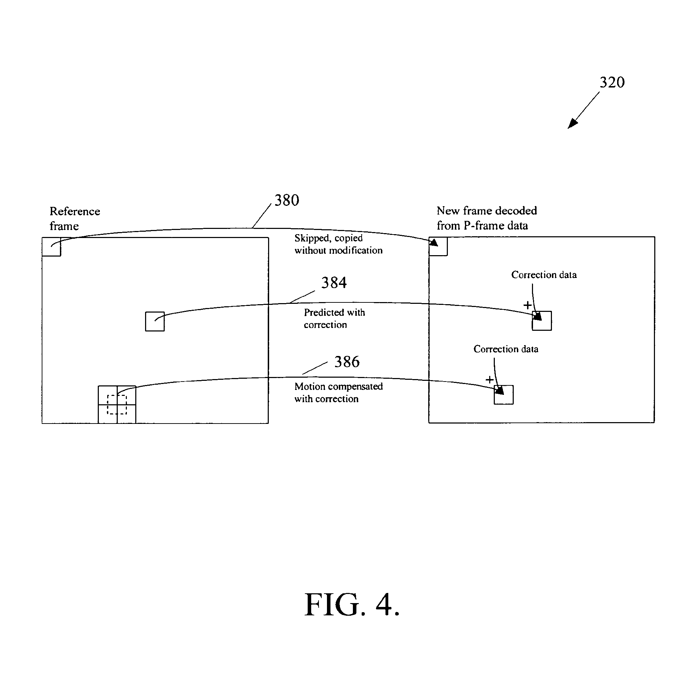

FIGURE 4 shows the principles behind P-frame coding. The decoder retains a past reference frame, which is the most recently displayed I- or P-frame. In any group of pictures in a video sequence, the first encoded frame is an I-frame, which forms the first reference frame for the sequence. A P-frame is encoded relative to the reference frame content. A non-coded or skipped macroblock 380 is simply copied from the past reference frame to the new frame. A non-motion-compensated macroblock 384 is copied from the past reference with an added correction derived from the encoded coefficients of the macroblock. When desired, the encoder can specify a new quantizer value to be used in deriving a correction.

FIGURE 4 depicts two macroblock types, macroblocks 384 and 386, for which non-intra correction data is encoded in the P-frame data sequence. In both these macroblock types, the non-intra quantizer matrix is used to convert the encoded Discrete Cosine Transform (DCT) coefficients into actual DCT coefficients, which are then converted to luminance and chrominance correction values which are added to the luminance and chrominance values of the reference macroblock to generate the final macroblock data for the new frame.

In the MPEG-1 video compression standard, the non-intra quantizer matrix can be specified in the sequence header element. This element must occur at the beginning of a video sequence, and can be repeated before any I-frame or P-frame in the sequence. Each repetition of the video sequence header can specify new content for either or both of the intra and non-intra quantizer matrices. In MPEG-1 video, the same quantizer matrix is used for luminance and chrominance components of the image.

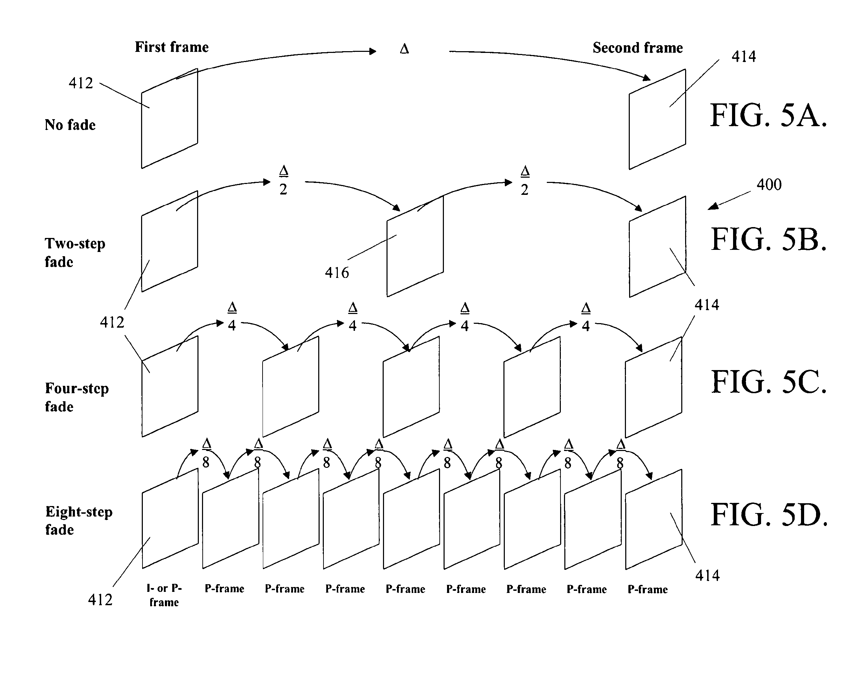

FIGURE 5A shows a no fade process. First, a reference frame 412 is generated from the first frame. This is preferably done by encoding the first frame 412 as an I-frame. Next, a second frame 414 is encoded as a P-frame using the first frame 412 as a reference. Each macroblock in the second frame 414 encoded image is encoded using any valid encoding type except Intra and Intra with Quantizer, with zero motion vectors (that is, zero horizontal offset and zero vertical offset). The result of this encoding process can be viewed as the difference between the first frame 412 and the second frame 414, or in other words the correction that must be applied on a macroblock-by-macroblock basis. When performing the encoding, a non-intra quantizer matrix is used for which each value is set to 16 (equivalent to the default non-intra quantizer matrix).

FIGURE 5B-D shows examples of multi-step fade processes that create a fade effect between a first frame 412 and a second frame 414. To create a fade effect, the P-frame data is used with a prepended sequence header. The new sequence header contains a specification for a non-intra quantizer matrix. To produce the fade effect, each element of the non-intra quantizer matrix is modified from the default value (preferably 16) to a fraction of that value (preferably one-half, one-quarter, or one-eighth) depending upon the details of the fade request. The resulting P-frame data can then be decoded multiple times (twice, four times, or eight times respectively; FIGURES 5 B-D). Each time the P-frame data is decoded, the new frame (which becomes the reference frame for the next decode operation) is modified by the corresponding fraction of the difference between the first frame 412 and the second frame 414, so that when the repetitive decoding is complete, the entire difference has been applied to the initial reference image (the first frame 412) to create the final reference image (the second frame 414). In particular, FIGURE 5B shows a two-step fade process 400. The sequence header contains a non-intra quantizer matrix where each value is one-half the default value (16/2 = 8), thus encoding half the difference between the first frame 412 and second frame 414. The resulting fade P-frame is decoded twice, resulting in a fade from the first frame 412 to the intermediate frame 416 to the final frame 414.

In the MPEG-1 standard, the value for the DCT coefficient of a given row *m* and column *n* in a non-intra 8x8 coefficient matrix is given by Equation (1):

$$dct\_recon[m][n] = \left(2 * dct\_zz[i] * quantizer\_scale * non\_intra\_quant[m][n]\right)/16 \qquad (1)$$

where *dct_recon[m][n]* is the reconstructed coefficient for row *m*, column *n*; *dct_zz[i]* is the *i*-th coefficient in zig-zag order; *quantizer_scale* is the overall quantizer for the slice; and *non_intra_quant[m][n]* is the non-intra quantizer matrix element for row *m*, column *n*. The reconstruction process requires that any even non-zero value is decremented by one if greater than zero, or incremented by one if less than zero. The default non-intra quantizer matrix value is 16 for every element, so Equation (1) reduces to Equation (2):

$$dct\_recon[m][n] = 2 * dct\_zz[i] * quantizer\_scale \qquad (2)$$

which always yields an even value, and is thus always decremented by one. Thus, for any coefficient value *k,* the reconstructed coefficient value is (2**k***quantizer_scale*-1).

The adjustment of even non-zero reconstructed coefficients limits the accuracy of the fade technique described above. The conversion from the reconstructed DCT coefficients to the luminance or chrominance adjustment is linear (except for round-off error), so applying a difference twice is equivalent to applying twice the difference. Consider the case where a P-frame is created with a *quantizer_scale* value of 4, and the resulting data is used to produce a fade effect according to the method described above. Suppose that for a given encoded macroblock coefficient value *k* is 1. In this case, the reconstructed coefficient is 7 (2*4-1) for the original non-intra quantizer matrix value of 16, but the reconstructed coefficient is 3 (2*2-1) when a two-step fade is performed (non-intra quantizer matrix value of 8). The difference introduces a modest error - applying the fade step twice yields a final value of 3+3=6, which is smaller than the original value of 7 by 15%. However, if a four-step fade is performed, the reconstructed coefficient for the fade frame (using a non-intra quantizer matrix value of 4) is 1 (2*1-1), so applying the fade four times yields a final value of 4, which is only 57% of the desired value. In practice, this means that when creating a fade, the quantizer should be at least as large as the number of fade steps, and preferably twice as large.

Note that at each step in any given fade, the identical P-frame encoded data content is presented to the decoder, resulting in an increment of the total change from the first frame to the second frame. Note that display time codes contained in a picture header of each P-frame may need to be modified so that time code for each presentation of the P-frame data corresponds to its linear position in time.

### Unequal fade steps

FIGURES 5B-D have the advantage that the same P-frame content is decoded at each step (except for the temporal reference in the header). As an alternative, the P-frame content could be modified at each step to have a different fraction of the initial differential content. Thus for instance a three-step fade could be created by using non-intra quantizer matrix values of 3, 5, and 8 (3+5+8=16).

### Extension to MPEG-2

In another embodiment, the MPEG-2 video encoding standard is used. In the MPEG-2 standard, video color formats other than 4:2:0 Y:Cb:Cr are permitted. The 4:2:2 and 4:4:4 color formats require the use of two non-intra quantizer matrices, which are defined in the Quant Matrix Extension header. In this case, the matrix values in the Quant Matrix Extension header would be modified according to the scheme described above.

### B-Frame fade effect

An alternative embodiment of this invention would employ the use of B-frame encoding rather than P-frame encoding. The quantizer values for each macroblock are modified to change the magnitude of change applied for each non-intra macroblock. Rather than using the default non-intra quantizer matrix, the values of the non-intra quantizer matrix are reduced to one-half, one-quarter, or one-eighth of the default value, with the quantizer scale value correspondingly multiplied by two, four, or eight. The new non-intra quantizer matrix is used to encode both the first and second frames of the fade, and the non-intra quantizer matrix is incorporated into the sequence header for the first reference I- or P-frame.

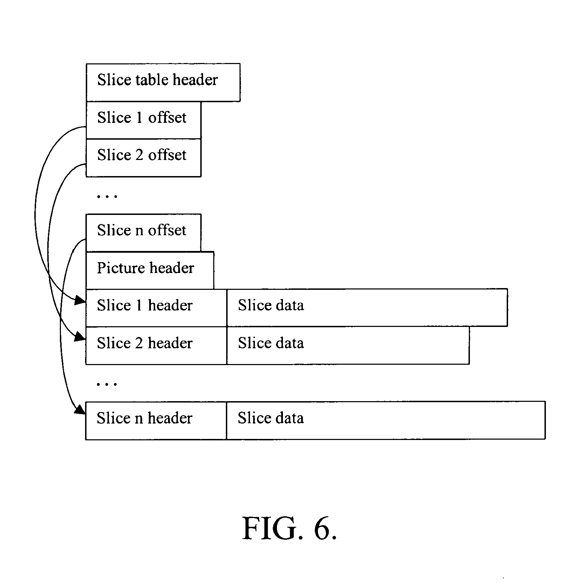

The first reference frame is encoded as an I- or P-frame, using the new non-intra quantizer matrix as required. The second frame is then encoded as a B-frame, using only the Fwd/Coded and Fwd/Not Coded macroblock types, which encode the differences between the reference frame and the second frame. In the resulting B-frame MPEG data, quantizer values are given in each successive Slice header. Decoding of this B-frame results in a new picture which is constructed relative to the past reference frame, and the new picture is displayed at the output. However, the new frame does not become the new reference frame or modify the existing reference frame. Thus, if the quantizer is gradually increased in successive presentations, the image content differences will be gradually applied to the reference image, yielding the desired fade effect. Thus, for instance, if a four-step fade is desired, the quantizer value $q$ for each slice would be set successively to $q/4$, $q/2$, $3q/4$, and $q$. Because slice headers present a unique byte pattern, they can be located in the encoded data with relative ease. In the preferable embodiment, the encoded data is contained in an alternate form. The data starts with a slice table header, which denotes the number of slices in the data. The slice table header is followed by a series of slice offsets, which give the offset in bytes from the beginning of the data to each corresponding slice. Following the slice table is the conventional MPEG picture header, and the slice data. The presence of the slice table allows for rapid location and modification of the quantizer values supplied in each slice header. The data configuration for this preferred data format is shown in FIGURE 6. The temporal reference for each successive B-frame would be set to the corresponding time slot in the sequence.

When this alternative is used, the quantizer value can be modified from frame to frame according to any desired sequence, including non-monotonic sequences, so that for instance an image fading from black could appear to fade in, then fade out, then fade back in again. Note that with the B-frame technique, no error accumulation occurs from step to step, so the number of steps in the fade sequence is essentially unlimited.

While the preferred embodiment of the invention has been illustrated and described, as noted above, many changes can be made without departing from the spirit and scope of the invention. Accordingly, the scope of the invention is not limited by the disclosure of the preferred embodiment. Instead, the invention should be determined entirely by reference to the claims that follow.

The embodiments of the invention in which an exclusive property or privilege is claimed are defined as follows:

**Claims**

1. A method comprising:

   receiving MPEG formatted images;
   generating one or more fade frame images between at least two of the received MPEG formatted images; and
   displaying the MPEG formatted images with the generated fade frame images.

2. The method of Claim 1, wherein generating includes:

   modifying a sequence header of one of the received MPEG formatted images based on a pre-determined fade event; and
   decoding the MPEG formatted image with the modified sequence header to generate fade frame images.

3. The method of Claim 3, wherein at least one of the received MPEG formatted images is a P-frame formatted image.

4. The method of Claim 2, further comprising repeating decoding a number of times based on the pre-determined fade event.

5. The method of Claim 4, wherein the pre-determined fade event includes a manually selected fade signal.

6. The method of Claim 4, wherein the pre-determined fade event includes an automatically selected fade signal.

7. The method of Claim 3, wherein modifying includes modifying a non-intra quantizer matrix included within the sequence header.

8. The method of Claim 2, wherein the received MPEG formatted image is a B-frame formatted image.

9. The method of Claim 8, further comprising repeating modifying a number of times based on the pre-determined fade event.

10. The method of Claim 9, wherein the pre-determined fade event includes a manually selected fade signal.

11. The method of Claim 9, wherein the pre-determined fade event includes an automatically selected fade signal.

12. A system comprising:

   a computer-based device comprising:

      a receiver configured to receive MPEG formatted images; and
      a component configured to generate one or more fade frame images between at least two of the received MPEG formatted images; and

   a display device configured to display the MPEG formatted images with the generated fade frame images.

13. The system of Claim 12, wherein the component modifies a sequence header of one of the received MPEG formatted images based on a pre-determined fade event, and decodes the MPEG formatted image with the modified sequence header.

14. The system of Claim 13, wherein the received MPEG formatted images include one or more P-frame formatted image.

15. The system of Claim 13, wherein the decoder repeats decoding the P-frame formatted image a number of times based on the pre-determined fade event.

16. The system of Claim 15, wherein the pre-determined fade event includes a manually selected fade signal.

**17.** The system of Claim 15, wherein the pre-determined fade event includes an automatically selected fade signal.

**18.** The system of Claim 13, wherein the component modifies a non-intra quantizer matrix included within the sequence header.

**19.** The system of Claim 13, wherein the received MPEG formatted image is a B-frame formatted image.

**20.** The system of Claim 19, wherein the component repeats modifying the sequence header a number of times based on the pre-determined fade event.

**21.** The system of Claim 20, wherein the pre-determined fade event includes a manually selected fade signal.

**22.** The system of Claim 20, wherein the pre-determined fade event includes an automatically selected fade signal.

FIG. 1.

FIG. 2.

300

SELECT IMAGE OR SUB-
IMAGE — 302

↓

ENCODE USING P-
FRAME FORMAT — 304

↓

SEND TO CLIENT — 306

↓

IS A
FADE TO
OCCUR
? — 308

N → DECODE ENCODED
P-FRAME
FORMATTED IMAGE — 310

↓

DISPLAY DECODED
IMAGE — 312

Y ↓

DETERMINE NUMBER OF
FADE FRAMES — 320

↓

MODIFY SEQUENCE HEADER OF
REFERENCE FRAME BASED ON
DETERMINED NUMBER OF FRAMES — 324

↓

DECODE P-FRAME IMAGE WITH
MODIFIED SEQUENCE HEADER — 326

↓

DISPLAY DECODED IMAGE — 328

↓

HAVE
THE NUMBER OF
FADES FRAMES
BEEN REACHED
? — 332

N

Y → DONE

FIG. 3.

320

Reference
frame

380

New frame decoded
from P-frame data

Skipped, copied
without modification

Correction data

384

Predicted with
correction

+

Correction data

386

Motion compensated
with correction

+

# FIG. 4.

FIG. 5A.

FIG. 5B.

FIG. 5C.

FIG. 5D.

| Slice table header |
|---|
| Slice 1 offset |
| Slice 2 offset |

. . .

| Slice n offset |
|---|
| Picture header |

| Slice 1 header | Slice data |
|---|---|
| Slice 2 header | Slice data |

. . .

| Slice n header | Slice data |
|---|---|

# FIG. 6.

**European Patent**
**Office**

**EUROPEAN SEARCH REPORT**

Application Number

EP 06 25 2388

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2004/057609 A (KONINKLIJKE PHILIPS ELECTRONICS N.V; KELLY, DECLAN, P; NESVADBA, JAN,) 8 July 2004 (2004-07-08) <br> * page 2, line 11 - line 19 * <br> * page 5, line 19 - line 24 * <br> * page 7, line 26 - last line * <br> * page 9, line 23 - line 27 * <br> * claims 5,18,19,23 * <br> ----- | 1-22 | INV. <br> H04N7/26 <br> H04N7/30 |
| X | US 6 633 673 B1 (SHEN BO) <br> 14 October 2003 (2003-10-14) <br> * column 6, line 21 - line 65 * <br> * column 7, line 24 - column 15, line 45 * <br> * column 15, line 48 - column 16, line 43 * <br> * column 16, line 66 - column 17, line 14 * <br> ----- | 1-22 | |
| X | BO SHEN: "Fast fade-out operation on MPEG video" <br> IMAGE PROCESSING, 1998. ICIP 98. PROCEEDINGS. 1998 INTERNATIONAL CONFERENCE ON CHICAGO, IL, USA 4-7 OCT. 1998, LOS ALAMITOS, CA, USA,IEEE COMPUT. SOC, US, <br> 4 October 1998 (1998-10-04), pages 852-856, XP010308700 <br> ISBN: 0-8186-8821-1 <br> * the whole document * <br> ----- | 1-22 | TECHNICAL FIELDS SEARCHED (IPC) <br><br> H04N |
| X <br><br><br><br><br><br><br><br> A | KELLY D P ET AL: "VIRTUAL EDITING OF MPEG-2 STREAMS" <br> IEEE TRANSACTIONS ON CONSUMER ELECTRONICS, IEEE SERVICE CENTER, NEW YORK, NY, US, <br> vol. 47, no. 4, November 2001 (2001-11), pages 795-801, XP001200506 <br> ISSN: 0098-3063 <br> * page 800, left-hand column, paragraph 4 - paragraph 6; figure 9 * <br> ----- | 1,12 <br><br><br><br><br><br><br><br> 2-11, 13-22 | |

-/--

The present search report has been drawn up for all claims

| Place of search | Date of completion of the search | Examiner |
|---|---|---|
| Berlin | 23 August 2006 | Gries, T |

**EP 1 725 042 A1**

<table>
<tr><td>European Patent Office</td><td>EUROPEAN SEARCH REPORT</td><td>Application Number<br>EP 06 25 2388</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SMITH B C ET AL: "ALGORITHMS FOR MANIPULATING COMPRESSED IMAGES" IEEE COMPUTER GRAPHICS AND APPLICATIONS, IEEE SERVICE CENTER, NEW YORK, NY, US, vol. 13, no. 5, September 1993 (1993-09), pages 34-42, XP000562744 ISSN: 0272-1716 * page 40; figure 7; table 2 *<br>----- | 1-22 | |
| A | US 2002/061065 A1 (MOORE KEVIN) 23 May 2002 (2002-05-23) * paragraph [0014] * * paragraph [0019] - paragraph [0021] * * paragraph [0064] - paragraph [0074] * * paragraph [0182] - paragraph [0194] *<br>----- | 1-22 | |
| A | US 5 555 193 A (TSINBERG ET AL) 10 September 1996 (1996-09-10) * the whole document *<br>----- | 1-22 | |
| A | US 5 959 690 A (TOEBES, VIII ET AL) 28 September 1999 (1999-09-28) * the whole document *<br>----- | 1-22 | TECHNICAL FIELDS SEARCHED (IPC) |

The present search report has been drawn up for all claims

| Place of search | Date of completion of the search | Examiner |
|---|---|---|
| Berlin | 23 August 2006 | Gries, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

16

## ANNEX TO THE EUROPEAN SEARCH REPORT
## ON EUROPEAN PATENT APPLICATION NO.

EP 06 25 2388

This annex lists the patent family members relating to the patent documents cited in the above-mentioned European search report.
The members are as contained in the European Patent Office EDP file on
The European Patent Office is in no way liable for these particulars which are merely given for the purpose of information.

23-08-2006

| Patent document cited in search report | | Publication date | Patent family member(s) | | Publication date |
|---|---|---|---|---|---|
| WO 2004057609 | A | 08-07-2004 | AU<br>CN<br>JP | 2003283675 A1<br>1726552 A<br>2006511147 T | 14-07-2004<br>25-01-2006<br>30-03-2006 |
| US 6633673 | B1 | 14-10-2003 | NONE | | |
| US 2002061065 | A1 | 23-05-2002 | NONE | | |
| US 5555193 | A | 10-09-1996 | NONE | | |
| US 5959690 | A | 28-09-1999 | NONE | | |

EPO FORM P0459

For more details about this annex : see Official Journal of the European Patent Office, No. 12/82

**EP 1 725 042 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 60682025 A